# EUROPEAN PATENT APPLICATION

(11) **EP 4 096 222 A1**
(43) Date of publication of application: **30.11.2022**
(21) Application number: 20916077.9
(22) Date of filing: 13.11.2020
(51) Int. Cl.: H04N 21/2187

(54) **LIVE BROADCAST ASSISTANCE METHOD AND ELECTRONIC DEVICE**

(30) Priority: 22.01.2020 CN 202010074650
(71) Applicant: Beijing Dajia Internet Information Technology Co., Ltd., Beijing 100085 (CN)
(72) Inventor: CHEN, Xiao, Beijing 100085 (CN)
(74) Representative: Mathys & Squire
(86) International application number: PCT/CN2020/128677
(87) International publication number: WO 2021/147480

(57) **Abstract**

The present disclosure relates to a live broadcast assistance method and an electronic device. The live broadcast assistance method may comprise: acquiring first attribute information of a target live broadcast room, wherein the first attribute information is attribute information related to historical live broadcast activities in the target live broadcast room; training a preset initial anchor portrait model according to the first attribute information to obtain an anchor portrait model that is able to comprehensively reflect the attribute information of the first live broadcast room; and according to the anchor portrait model, assisting an anchor corresponding to the target live broadcast room in performing live broadcast activities. In the foregoing manner, with the help of the anchor portrait model that comprehensively reflects the attribute information of the target live broadcast room, the anchor corresponding to the target live broadcast room is assisted in performing live broadcast activities, and the anchor corresponding to the target live broadcast room responds to real-time requests of the audience in a comprehensive and timely manner during the live broadcast, which is used to avoid the phenomenon of failure to achieve expected results or loss of audience.

## Description

The application claims priority to the Chinese Patent Application No. 202010074650.6, filed with China National Intellectual Property Administration on January 22, 2020, and entitled "METHOD AND APPARATUS, ELECTRONIC DEVICE, AND STORAGE MEDIUM FOR ASSISTING LIVE STREAMING", the entire content of which is incorporated herein by reference.

### Field

The disclosure relates to the technical field of Internet, in particular to a method and an electronic device for assisting live streaming.

### Background

With the development of Internet technology and people's massive demand for culture and art, the live stream industry has ushered in unprecedented prosperity and development with the timeliness and interactivity of its information transmission. In order to achieve an expected live stream effect and attract more audiences, a streamer needs to make a lot of preparation work, personally remember a large number of interactive sessions and methods, and adjust live streaming activities according to real-time status of live streaming, which raises higher requirements for overall quality of the streamer.

However, the inventor found that requests of the audiences are various, if only relying on the streamer's manual processing, the real-time requests of the audiences cannot be responded fully and timely, causing some audiences' real-time requests to be ignored.

### Summary

The disclosure provides a method of assisting live streaming and an electronic device, so as to at least solve the problem of failure to comprehensively and timely respond to real-time request of audiences in the related art. The technical solutions of the disclosure are as follows.

A first aspect of an embodiment of the disclosure provides a method of assisting live streaming, including:
acquiring first attribute information of a target live room, wherein the first attribute information is attribute information related to historical activities of the target live room;
training a preset initial streamer portrait model based on the first attribute information to obtain a streamer portrait model; and
assisting a streamer of the target live room in doing a live stream according to the streamer portrait model.

A second aspect of an embodiment of the disclosure provides an apparatus of assisting live streaming, including:
an information acquisition unit, configured to acquire first attribute information of a target live room, wherein the first attribute information is attribute information related to historical activities in the target live room;
a model determination unit, configured to train a preset initial streamer portrait model based on the first attribute information to obtain a streamer portrait model; and
a live streaming assistance unit, configured to assist a streamer of the target live room in doing a live stream based on the streamer portrait model.

A third aspect of an embodiment of the disclosure provides an electronic device, including:
a processor; and
a memory configured to store instructions executable by the processor; wherein
when executing the instructions, the processor is configured to perform:
   acquiring first attribute information of a target live room, wherein the first attribute information is attribute information related to historical activities of the target live room;
   training a preset initial streamer portrait model based on the first attribute information to obtain a streamer portrait model; and
   assisting a streamer of the target live room in doing a live stream according to the streamer portrait model.

The technical solutions provided by the embodiments of the disclosure at least bring about the following beneficial effects.

The first attribute information of the target live room is acquired, where the first attribute information is the attribute information related to the historical activities of the target live room; the preset initial streamer portrait model is trained based on the first attribute information to obtain the streamer portrait model; and the streamer of the target live room is assisted in doing the live stream according to the streamer portrait model. In this way, through the streamer portrait model which comprehensively reflects attribute information of the target live room, the streamer of the target live room is assisted in doing the live stream, and comprehensively and promptly responding to real-time requests of audiences during a live broadcast process, so as to avoid a phenomenon of failure to achieve an expected effect or loss of the audiences.

It should be understood that the above general description and the following detailed description are only exemplary and explanatory, and cannot limit the disclosure.

### Brief Description of the Drawings

The drawings herein are incorporated into the specification and constitute a part of the specification, show embodiments conforming to the disclosure, and together with the specification are used to explain the principles of the disclosure, but do not constitute an improper limitation of the disclosure.
FIG. 1 illustrates a flowchart of a method of assisting live streaming according to an embodiment.
FIG. 2 illustrates a flowchart of an implementation of S200 according to an embodiment.
FIG. 3 illustrates a flowchart of an implementation of S200 according to an embodiment.
FIG. 4 illustrates a flowchart of an implementation of step S200 according to an embodiment.
FIG. 5 illustrates a flowchart of an implementation of a method of assisting live streaming according to an embodiment.
FIG. 6 illustrates a flowchart of data analysis by a server side according to an embodiment.
FIG. 7 illustrates a flowchart of data collection according to an embodiment.
FIG. 8 illustrates a block diagram of an apparatus of assisting live streaming according to an embodiment.
FIG. 9 illustrates a block diagram of an electronic device according to an embodiment.
FIG. 10 illustrates a block diagram of an apparatus of assisting live streaming according to an embodiment.

### Detailed Description of the Embodiments

In order to make the objectives, technical solutions, and advantages of the disclosure clearer, the technical solutions of embodiments of the disclosure will be clearly and completely described in detail below in combination with the accompanying drawings of the embodiments of the disclosure.

It should be noted that the terms "first", "second" and the like in the specification and claims of the disclosure as well as the drawings are used for distinguish similar objects and are not necessarily used for describing specific order or sequence. It should be understood that data used in this way may be interchanged under appropriate circumstances so that embodiments of the disclosure described herein may be implemented in an order other than those illustrated or described herein. Implementations described in the following exemplary embodiments do not represent all implementations consistent with the disclosure. On the contrary, they are merely examples of apparatuses and methods consistent with some aspects of the disclosure as detailed in the appended claims.

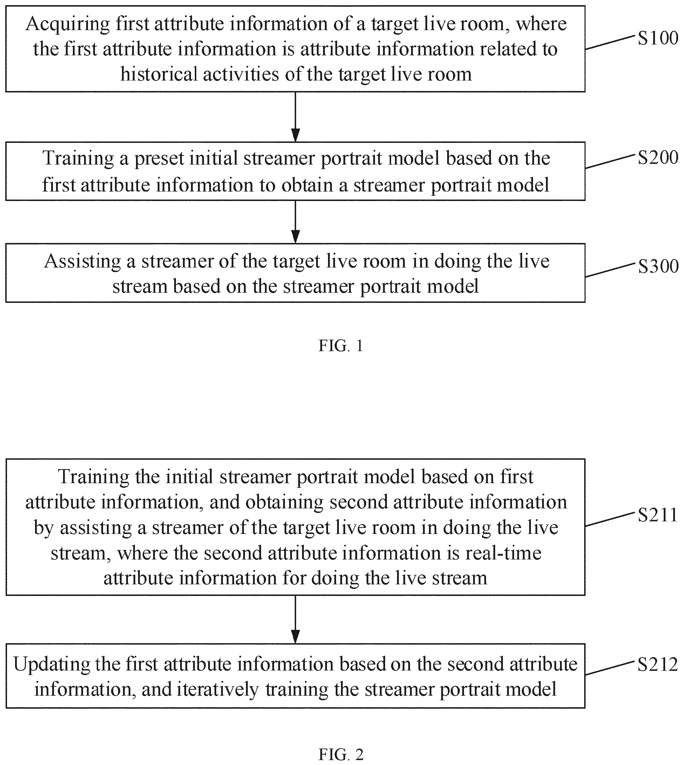

FIG. 1 illustrates a flowchart of a method of assisting live streaming according to an embodiment of the disclosure. As shown in FIG. 1, the method of assisting live streaming includes the following:
S 100: acquiring first attribute information of a target live room, where the first attribute information is attribute information related to historical activities of the target live room;
S200: training a preset initial streamer portrait model according to the first attribute information for obtaining a streamer portrait model; and
S300: assisting the streamer of the target live room in living streaming according to the streamer portrait model.

A live room is provided by a platform where a network host conducts live streaming at major live stream platform websites, and audiences may find and join a corresponding live room by entering the name of the streamer or channel number and room number on a live streaming platform website where the host sets up the live room. The target live room is a live room that needs assistance for living streaming. The first attribute information is the attribute information corresponding to the target live room, including types of live room (ordinary live room, themed live room, game live room, etc.), terminal location and inverse geography information (country, city, area, street), networking environment, time stamp, and live streaming progress (show activities that have been carried out, etc.).

In some embodiments, after the first attribute information of the target live room is acquired, a feature set of the first attribute information is extracted. The feature set of the first attribute information is configured for training the preset initial streamer portrait model to obtain the streamer portrait model. The first attribute information of the target live room may be attribute information in historical live stream records of the streamer of the target live room, or may be current attribute information of the target live room. When the streamer portrait model is obtained through training, the streamer portrait model is configured to assist the streamer of the target live room in living streaming. While the live streaming is conducted, a server may continuously acquire the attribute information of the target live room, use the current attribute information to update the first attribute information, and update the streamer portrait model according to the updated first attribute information, to allow the streamer portrait model trained with latest data to be configured to assist the streamer in doing the living stream, and to improve the applicability of the model. Where assisting the streamer of the target live room in doing the live stream according to the streamer portrait model includes: recommending a personalized live streaming method for the streamer, thus existing one-way communication mode is changed into a two-way mode, and interaction between the streamer and the audiences is enriched.

According to the method of assisting live streaming, the first attribute information of the target live room is acquired; the first attribute information is the attribute information related to the historical activities of the target live room; the preset initial streamer portrait model is trained to obtain the streamer portrait model that comprehensively reflects the attribute information of the first live room according to the first attribute information; and the streamer of the target live room is assisted in doing the live stream according to the streamer portrait model.

In some embodiments, the disclosure may enable the streamer of the target live room to fully and promptly respond to real-time requests of the audiences during live streaming, so as to avoid the phenomenon that the real-time requests are ignored, and the phenomenon of failure to achieve an expected effect or loss of the audiences.

FIG. 2 illustrates a flowchart of an implementation of S200 according to an embodiment. As shown in FIG. 2, the implementation includes the following:
S211: training the initial streamer portrait model according to the first attribute information, and obtaining second attribute information by assisting the streamer of the target live room in live streaming, where the second attribute information is real-time attribute information for live streaming; and
S212: updating the first attribute information based on second attribute information, and training the streamer portrait model iteratively.

Preset rules are determined according to a type of the target live room and needs of a user, which are not limited here. For example, according to frequency needs of the user, iterative training is performed every 5 minutes to update the streamer portrait model.

In some embodiments, the streamer portrait model is obtained through training the initial streamer portrait model by using the first attribute information. The streamer portrait model serves as a live room assistant and may assist the streamer of the target live room in doing the live stream. During live streaming, the second attribute information of the target live room is collected in real time, and is configured to update the first attribute information. Iterative training is performed according to the preset rules to obtain a new streamer portrait model to improve real-time applicability of the streamer portrait model. In some embodiments, the first attribute information may be updated based on the second attribute information, and the streamer portrait model is iteratively trained based on the updated first attribute information, so as to determine a final streamer portrait model.

In the embodiment, the initial streamer portrait model is trained according to the first attribute information, the streamer of the target live room is assisted in doing the live stream to obtain the second attribute information; the first attribute information is updated based on the second attribute information, and the streamer portrait model is iteratively trained. In this way, the newly collected second attribute information may be adopted to update the streamer portrait model, improve the real-time applicability of the streamer portrait model, and avoid the phenomenon that live streaming content is not real-time due to use of old data.

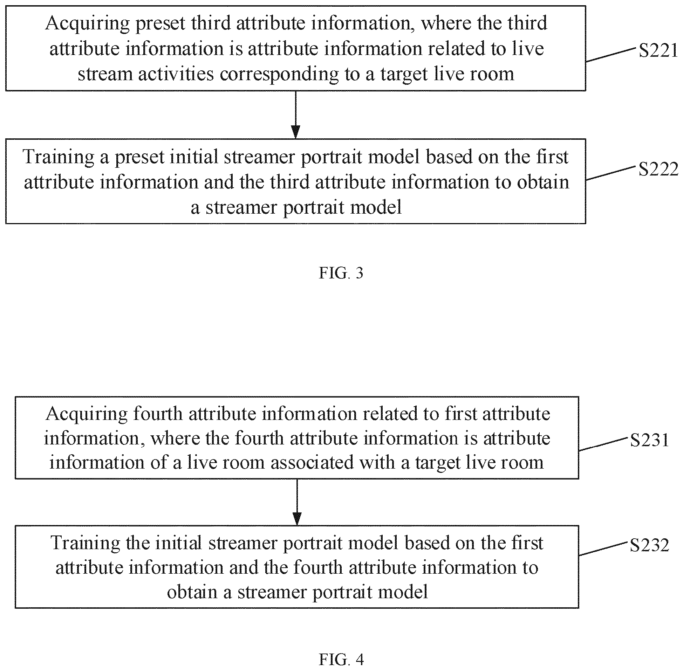

FIG. 3 illustrates a flowchart of an implementation of S200 according to an embodiment. As shown in FIG. 3, the implementation includes the following:
S221: acquiring preset third attribute information, where the third attribute information is attribute information related to the live steam activities corresponding to the target live room; and
S222: training the preset streamer portrait model according to the first attribute information and the third attribute information to obtain the streamer portrait model.

The third attribute information is preset attribute information, including a personalized response manner of the streamer of the target live room or a response manner in a specific scenario or environment. For example, when the target live room is a game live room, response manners non-related to games are shielded.

In some embodiments, the first attribute information and the third attribute information are configured to train the preset initial streamer portrait model, so that the obtained streamer portrait model can make a corresponding assistant response according to the preset third attribute information. More personalized assistance forms are presented, and the streamer's personalized characteristics are reflected during live streaming, so as to avoid the phenomenon of lack of features of the streamer when the streamer portrait model assists the live broadcast.

FIG. 4 illustrates a flowchart of an implementation of S200 according to an embodiment. As shown in FIG. 4, the implementation includes the following:
S231, acquiring fourth attribute information related to the first attribute information, where the fourth attribute information is attribute information of a live room associated with the target live room; and
S232, training the preset initial streamer portrait model based on the first attribute information and the fourth attribute information to obtain the streamer portrait model.

In some embodiments, the streamer portrait model can learn and record behaviors of the user participating in the live stream, but in the case of insufficient data for the first attribute information in an early stage, characteristics of live stream with a similar theme may be summarized to obtain the fourth attribute information. The fourth attribute information and a small amount of the first attribute information may be configured to train the preset initial streamer portrait model to obtain the streamer portrait model, so as to assist the streamer in doing the live stream, realize personalized customization of the live room and the streamer features, and accelerate the accumulation of attribute information data.

In some embodiments, a live room attribute data set is obtained; and correlation analysis is performed on the live room attribute data set and the first attribute information, and the live room attribute data set whose correlation meets a preset condition is determined as the fourth attribute information.

The preset condition is determined based on a type of the streamer and an expected effect, which are not particularly limited here. The condition that can screen a larger correlation or meet the user's requirements shall prevail.

In some embodiments, the correlation analysis is performed on the live room attribute data set and the first attribute information, and the live room attribute data set whose correlation satisfies the preset condition is determined as the fourth attribute information.

In the embodiment, the fourth attribute information related to the first attribute information is acquired, where the fourth attribute information is attribute information of the live room associated with the target live room, and the preset initial streamer portrait model is trained according to the first attribute information and the fourth attribute information to obtain the streamer portrait model, so that personalized customization of the live room and the streamer features can be realized, and the accumulation of the attribute information data can be accelerated.

In some embodiments, an implementation in S300 includes:
detecting instruction information of the target live room; and
when an instruction being initiated in the target live room is detected, in response to the instruction, assisting the streamer of the target live room in doing the live stream based on the streamer portrait model.

In some embodiments, the first attribute information is detected; and in response to the first attribute information satisfying a preset polling rule, the streamer of the target live room is assisted in doing the live stream based on the streamer portrait model.

In some embodiments, the disclosure introduces a recommendation system to generate the streamer portrait model, uses the streamer portrait model as a recommendation model, and uses collected data information to collect context information, such as historical instructions (including voice, text and other formats), hashtag of the live room, a location where the live stream occurs, and terminal devices, as the first attribute information to train the initial streamer portrait model and save a result corresponding to each streamer. When the streamer portrait model assists the streamer of the target live room in doing the live stream, timing for obtaining a recommendation from the streamer portrait model includes a trigger type and a polling type. The trigger type is, when detecting that the target live room initiates the instruction (the streamer or the audience initiates the instruction), in response to the instruction, acquiring response content with the result from the server according to the streamer portrait model, so as to assist the streamer of the target live room in doing the live stream. While, the polling type is to detect the first attribute information, and to acquire a training result of the server according to the streamer portrait model when the first attribute information meets the preset polling rule (for example, a request is initiated periodically or a request is initiated when a specific condition is met), so as to assist the streamer of the target live room in doing the live stream.

In the embodiment, the trigger type and the polling type are adopted to provide assistance trigger conditions for the streamer portrait model, and assist the streamer of the target live room in doing the live stream, which may alleviate the problems of decrease in duration of interaction in the live room and insufficient number of the audiences caused by insufficient information.

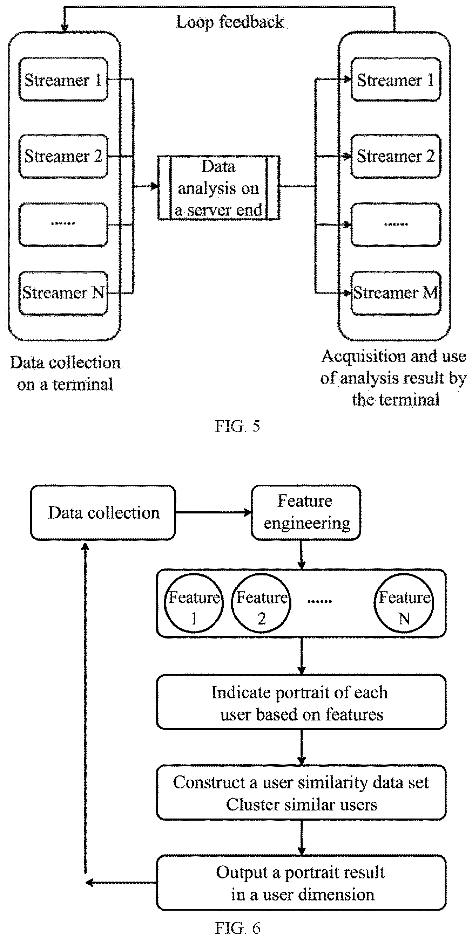

FIG. 5 illustrates a flowchart of an implementation of a method of assisting live streaming according to an embodiment. As shown in FIG. 5, a main process of the disclosure includes: data collection on a terminal, data analysis on a server, and acquisition and use of analysis result by the terminal.

Streamer 1, streamer 2, ..., and streamer N in FIG. 5 represent a large number of streamers in the module "data collection on the terminal", and streamer 1, streamer 2, ..., and streamer M represent a large number of streamers in the module "acquisition and use of analysis result by the terminal".

The data collection on the terminal includes: on each terminal capable of live streaming (each terminal corresponds to a streamer), a robot (a device deployed for the streamer portrait model) collects instruction content and context content of the live room in a period of serving a request (initiated instruction) of the user (the streamer and the audiences), including network, geographic information, live stream category tags and other information, packages the content and sends it to a remote server.

The data analysis on the server includes: the server parses the packaged content, converts uploaded content into a feature set as input data of a following step, trains a portrait of each streamer based on the input data, where a range of the input data includes all historical activities participated in by the streamer and all functions used by the streamer, and saves the streamer portrait model obtained through training. In some embodiments, data analysis on the server further includes other data analysis work, such as analyzing similarity between the portraits, clustering portraits with similarity greater than a threshold, and filtering the input data to prevent cheating. In the case of insufficient data for the streamer in the early stage, there is not enough input for training and learning. In this case, an output result will use other streamer portraits with similar live stream content, or a bottom-up strategy (determined according to specific business scenarios). The data analysis on the server includes: the server parses data uploaded by the terminal and obtains the following two forms of input characteristics: first, context information includes but is not limited to the type of the live room (ordinary live room, themed live room, game live broadcast, etc.), the location and reverse geography of the terminal (country, city, area, street), the networking environment, the time stamp, the live broadcast progress (show activities that have been carried out, etc.); second, voice and text content: the instructions and text data initiated by the streamer and the audiences. FIG. 6 illustrates a flowchart of data analysis of a server according to an embodiment. The data analysis process on the server includes: the server receives, parses, and performs feature engineering on the uploaded data, which includes semantic parse, noise value filtering, data conversion, feature selection, dimensionality reduction and other steps, and calculates a feature set representing user attributes. Through feature engineering, high-frequency behaviors of each user may be learned, and be added to supervised training and learning to obtain hobbies and characteristics of each user; a user correlation data set is constructed, and similarity analysis is conducted to collect users similar in the hobbies, the historical behavior activities and the content of live rooms into a collection, so as to generate a users' streamer portrait collection based on a voice robot in the live room. The server will receive new uploaded data in a fixed period, repeat the above processes, update results of an existing streamer profile model, iteratively train the model, and save parameters of the trained streamer profile model.

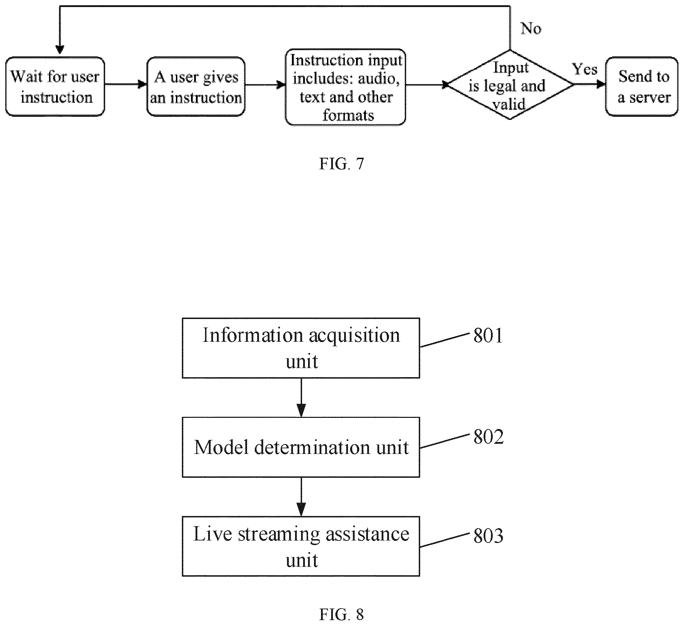

The acquisition and use of analysis result by the terminal includes: after the streamer turns on the terminal, a streamer portrait model training result from the server is obtained through instruction triggering or polling, and the result is fed back to the streamer in forms of text, voice, etc., and personalization of the streamer portrait model is iteratively improved. FIG. 7 illustrates a flowchart of data collection according to an embodiment, where illegal instructions that do not meet requirements will be discarded.

A collection and detection process is carried out at the same time when the streamer portrait model receives user instructions, and content is also detected on the server. After the detection is passed, the content will be saved as effective data, otherwise it will be discarded. The content will be encrypted and packaged to prevent it from being captured and cracked by a third party.

There are three scenarios for the streamer portrait model (usually presented in a form of an intelligent voice robot during live streaming) feeding back the analysis results to the streamer or the user in the live room: 1. there is not much interaction with the voice robot (such as the first use), the server issues a recommended strategy based on portrait results of other users in similar live stream environments and content; 2. the server predicts current environment based on a timestamp and context of the live room (the user and the robot have not interacted for a long time), and then based on the user's portrait results, issues a recommended strategy; 3. if the current live streaming environment is in a special scene (festival, competition, etc.), the server recommends a strategy based on the special scene.

FIG. 8 is a block diagram of an apparatus of assisting live streaming according to an embodiment. According to FIG. 8, the apparatus includes an information acquisition unit 801, a model determination unit 802, and a live streaming assistance unit 803.

The information acquisition unit 801 is configured to acquire first attribute information of a target live room, where the first attribute information is attribute information related to historical activities in the target live room.

The model determination unit 802 is configured to train a preset initial streamer portrait model based on the first attribute information to obtain a streamer portrait model.

The live streaming assistance unit 803 is configured to, based on the streamer portrait model, assist a streamer of the target live room in doing a live stream.

In some embodiments, the model determination unit 802 is configured to:
train the initial streamer portrait model based on the first attribute information, and obtain second attribute information by assisting the streamer of the target live room doing the live stream, where the second attribute information is real-time attribute information for doing the live stream; and
update the first attribute information based on the second attribute information, and train the streamer portrait model iteratively.

In some embodiments, the information acquisition unit 801 may also be configured to acquire preset third attribute information, where the third attribute information is attribute information related to the live stream activities corresponding to the target live room; and
the model determination unit 802 is further configured to train the preset initial streamer portrait model based on the first attribute information and the third attribute information to obtain the streamer portrait model.

In some embodiments, the information acquisition unit 801 may also be configured to acquire fourth attribute information related to the first attribute information, where the fourth attribute information is attribute information of a live room associated with the target live room; and
the model determination unit 802 is further configured to train the preset initial streamer portrait model based on the first attribute information and the fourth attribute information to obtain the streamer portrait model.

In some embodiments, the information acquisition unit 801 may be configured to:
acquire a live room attribute data set; and
perform correlation analysis on the live room attribute data set and the first attribute information, and determine the live room attribute data set with correlation meets a preset condition as the fourth attribute information.

In some embodiments, the live streaming assistance unit 803 may be configured to:
detect instruction information of the target live room; and
when detecting that the target live room initiates an instruction, in response to the instruction, assist the streamer of the target live room in doing the live stream based on the streamer portrait model.

In some embodiments, the live streaming assistance unit 803 may be configured to:
detect the first attribute information; and
when the first attribute information satisfies a preset polling rule, assist the streamer of the target live room in doing the live stream based on the streamer portrait model.

Regarding the apparatus in the foregoing embodiment, specific manners in which the units perform operation have been described in detail in the embodiment concerning the method, and detailed description will not be given here.

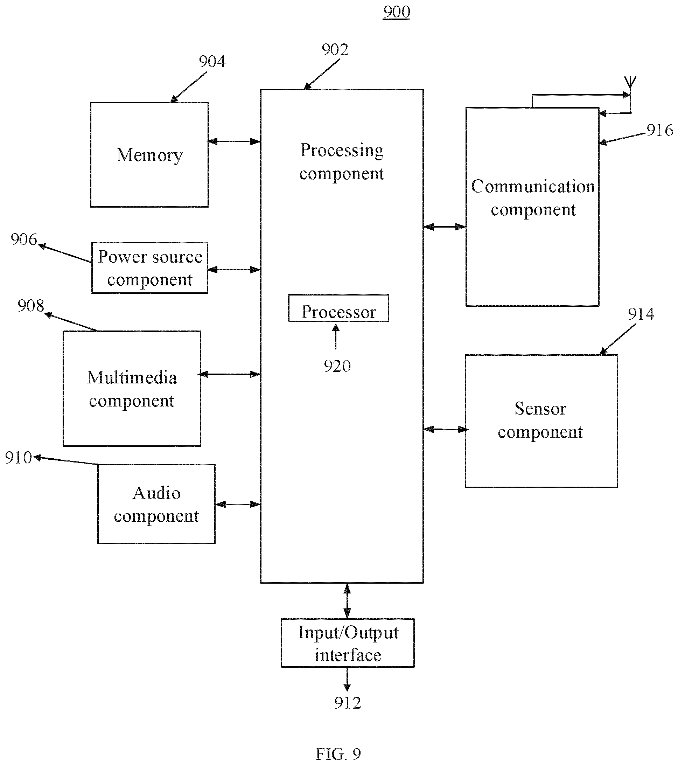

FIG. 9 is a block diagram of an electronic device 900 for assisting live streaming according to an embodiment. For example, the device 900 may be a mobile phone, a computer, a digital broadcasting terminal, a messaging device, a game console, a tablet device, a medical device, a fitness device, a personal digital assistant, and the like.

As shown in FIG. 9, the device 900 may include one or more of the following components: a processing component 902, a memory 904, a power source component 906, a multimedia component 908, an audio component 910, an input/output (I/O) interface 912, a sensor component 914, and a communication component 916.

The processing component 902 generally controls overall operations of the device 900, such as operations associated with display, telephone calls, data communication, camera operations, and recording operations. The processing component 902 may include one or more processors 920 to execute instructions to complete all or part of the steps of the foregoing method. In addition, the processing component 902 may include one or more modules to facilitate interaction between the processing component 902 and other components. For example, the processing component 902 may include a multimedia module to facilitate interaction between the multimedia component 908 and the processing component 902.

The memory 904 is configured to store various types of data to support the operations of the device 900. Examples of these data include instructions for any application or method operating on the device 900, contact data, phone book data, messages, pictures, videos, etc. The memory 904 may be implemented by any type of volatile or non-volatile storage devices or a combination thereof, such as a Static Random-Access Memory (SRAM), an Electrically-Erasable Programmable Read-Only Memory (EEPROM), an Erasable Programmable Read-Only Memory (EPROM), a Programmable Read Only Memory (PROM), a Read Only Memory (ROM), a magnetic memory, a flash memory, a magnetic disk or an optical disk.

The power source component 906 provides power to various components of the device 900. The power source component 906 may include a power management system, one or more power sources, and other components associated with generating, managing, and distributing power for the device 900.

The multimedia component 908 includes a screen that provides an output interface between the device 900 and a user. In some embodiments, the screen may include a Liquid Crystal Display (LCD) and a TouchPanel (TP). If the screen includes the TP, the screen may be implemented as a touch screen to receive an input signal from the user. The TP includes one or more touch sensors to sense touch, sliding, and gestures on the TP. The touch sensor may not only sense a boundary of the touch or a sliding action, but also detect a duration and pressure related to the touch or sliding action. In some embodiments, the multimedia component 908 includes a front camera and/or a rear camera. When the device 900 is in an operation mode, such as a shooting mode or a video mode, the front camera and/or the rear camera may receive external multimedia data. Each front camera and rear camera may be a fixed optical lens system or have focal length and optical zoom capabilities.

The audio component 910 is configured to output and/or input an audio signal. For example, the audio component 910 includes a Microphone (MIC). When the device 900 is in the operation mode, such as a call mode, a recording mode, and a voice recognition mode, the MIC is configured to receive an external audio signal. The received audio signal may be further stored in the memory 904 or transmitted via the communication component 916. In some embodiments, the audio component 910 further includes a speaker for outputting an audio signal.

The I/O interface 912 provides an interface between the processing component 902 and a peripheral interface module. The above-mentioned peripheral interface module may be a keyboard, a click wheel, buttons, and the like. These buttons may include, but are not limited to: a home button, a volume button, a start button, and a lock button.

The sensor component 914 includes one or more sensors for providing the device 900 with various aspects of state evaluation. For example, the sensor component 914 may detect an on/off status of the device 900 and relative positioning of the components. For example, when the components are a display and a keypad of the device 900, the sensor component 914 may also detect a position change of the device 900 or the component of the device 900, presence or absence of contact between the user and the device 900, orientation or acceleration/deceleration of the device 900, and a temperature change of the device 900. The sensor component 914 may include a proximity sensor configured to detect presence of a nearby object when there is no physical contact. The sensor component 914 may also include a light sensor, such as a Complementary Metal-Oxide Semiconductor (CMOS) or a Charge Coupled Device (CCD) image sensor for use in imaging applications. In some embodiments, the sensor component 914 may also include an acceleration sensor, a gyroscope sensor, a magnetic sensor, a pressure sensor, or a temperature sensor.

The communication component 916 is configured to facilitate wired or wireless communication between the device 900 and other devices. The device 900 may access a wireless network based on a communication standard, such as Wireless-Fidelity (WiFi), an operator network (such as 2G, 3G, 4G, or 5G), or a combination thereof. In one embodiment, the communication component 916 receives a broadcast signal or broadcast-related information from an external broadcast management system via a broadcast channel. In one embodiment, the communication component 916 further includes a Near Field Communication (NFC) module to facilitate short-range communication. For example, the NFC module may be realized based on Radio Frequency Identification (RFID) technology, Infrared Data Association (IrDA) technology, Ultra Wide Band (UWB) technology, Bluetooth (BT) technology and other technologies.

In some embodiments, the device 900 may be implemented by one or more Application Specific Integrated Circuits (ASICs), Digital Signal Processors (DSPs), Digital Signal Processing Devices (DSPDs), Programmable Logic Device (PLDs), Field-Programmable Gate Array (FPGAs), controllers, microcontrollers, microprocessors or other electronic elements to implement the above method.

In some embodiments, a storage medium including instructions is further provided, for example, the memory 904 including instructions, wherein the foregoing instructions may be executed by the processor 920 of the device 900 to complete the foregoing method. In some embodiments, the storage medium may be a non-transitory computer-readable storage medium. For example, the non-transitory computer-readable storage medium may be a ROM, a Random Access Memory (RAM), or a Compact Disk Read Only Memory (CD-ROM), a magnetic tape, a floppy disk and an optical data storage device, etc.

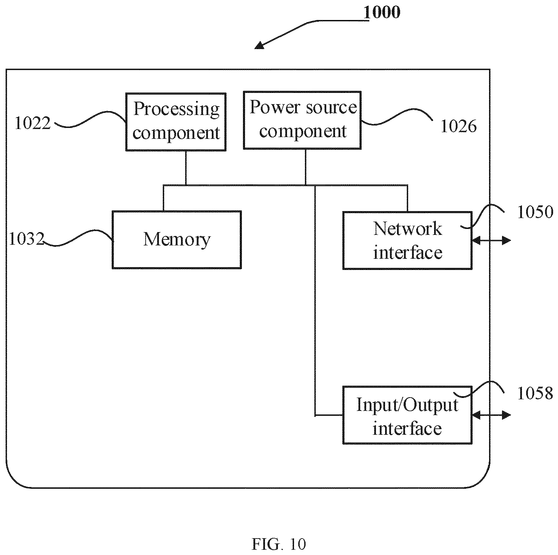

FIG. 10 is a block diagram of an apparatus 1000 for assisting live streaming according to an embodiment. For example, the apparatus 1000 may be provided as a server. As shown in 10, the apparatus 1000 includes a processing component 1022, which further includes one or more processors and a memory resource represented by a memory 1032, for storing an instruction executable by the processing component 1022, such as an application program. The application program stored in the memory 1032 may include one or more modules each corresponding to a set of instructions. In addition, the processing component 1022 is configured to execute the instructions to execute the above-mentioned method of assisting live streaming.

The apparatus 1000 may further include a power source component 1026 configured to perform power management of the apparatus 1000, a wired or wireless network interface 1050 configured to connect the apparatus 1000 to a network, and an input/output (I/O) interface 1058. The apparatus 1000 may operate an operating system stored in a memory 1032, such as Windows ServerTM, Mac OS XTM, UnixTM, LinuxTM, FreeBSDTM or the like.

Those skilled in the art will easily think of other embodiments of the disclosure after considering the specification and practicing the content disclosed herein. The disclosure is intended to cover any variations, uses, or adaptive changes of the disclosure. These variations, uses, or adaptive changes follow the general principles of the disclosure and include common knowledge or conventional technical means in the technical field that are not disclosed in the disclosure. The specification and the embodiments are to be regarded as exemplary only, and the true scope and spirit of the disclosure are pointed out by the following claims.

It should be understood that the disclosure is not limited to the precise structure that has been described above and shown in the drawings, and various modifications and changes can be made without departing from its scope. The scope of the disclosure is only limited by the appended claims.

## Claims

1. A method of assisting live streaming, comprising:
acquiring first attribute information of a target live room, wherein the first attribute information is attribute information related to historical activities of the target live room;
training a preset initial streamer portrait model based on the first attribute information to obtain a streamer portrait model; and
assisting a streamer of the target live room in doing a live stream according to the streamer portrait model.

2. The method of assisting live streaming according to claim 1, wherein said that training a preset initial streamer portrait model based on the first attribute information to obtain a streamer portrait model, comprises:
training the initial streamer portrait model based on the first attribute information, and obtaining second attribute information by assisting the streamer of the target live room in doing the live stream, wherein the second attribute information is real-time attribute information for doing the live stream; and
updating the first attribute information based on the second attribute information, and iteratively training the streamer portrait model.

3. The method of assisting live streaming according to claim 1, wherein said that training the preset initial streamer portrait model based on the first attribute information to obtain the streamer portrait model comprises:
acquiring preset third attribute information, wherein the third attribute information is attribute information related to live stream activities corresponding to the target live room; and
training the preset initial streamer portrait model based on the first attribute information and the third attribute information to obtain the streamer portrait model.

4. The method of assisting live streaming according to claim 1, wherein said that training the preset initial streamer portrait model based on the first attribute information to obtain the streamer portrait model comprises:
acquiring fourth attribute information related to the first attribute information, wherein the fourth attribute information is attribute information of a live room associated with the target live room; and
training the preset initial streamer portrait model based on the first attribute information and the fourth attribute information to obtain the streamer portrait model.

5. The method of assisting live streaming according to claim 4, wherein said that acquiring the fourth attribute information related to the first attribute information comprises:
acquiring a live room attribute data set; and
performing correlation analysis on the live room attribute data set and the first attribute information, and determining a live room attribute data set with a correlation meeting a preset condition as the fourth attribute information.

6. The method of assisting live streaming according to claim 1, wherein said that assisting the streamer of the target live room in doing the live stream based on the streamer portrait model comprises:
detecting instruction information of the target live room; and
when detecting that the target live room initiates an instruction, in response to the instruction, assisting the streamer of the target live room in doing the live stream based on the streamer portrait model.

7. The method of assisting live streaming according to claim 1, wherein said that assisting the streamer of the target live room in doing the live stream based on the streamer portrait model comprises:
detecting the first attribute information; and
in response to the first attribute information satisfying a preset polling rule, assisting the streamer of the target live room in doing the live stream based on the streamer portrait model.

8. An apparatus of assisting live streaming, comprising:
an information acquisition unit, configured to acquire first attribute information of a target live room, wherein the first attribute information is attribute information related to historical activities in the target live room;
a model determination unit, configured to train a preset initial streamer portrait model based on the first attribute information to obtain a streamer portrait model; and
a live streaming assistance unit, configured to assist a streamer of the target live room in doing a live stream based on the streamer portrait model.

9. The apparatus of assisting live streaming according to claim 8, wherein the model determination unit is configured to:
train the initial streamer portrait model based on the first attribute information, and obtain second attribute information by assisting the streamer of the target live room in doing the live stream, wherein the second attribute information is real-time attribute information for doing the live stream; and
update the first attribute information based on the second attribute information, and iteratively train the streamer portrait model.

10. The apparatus of assisting live streaming according to claim 8, wherein
the information acquisition unit is further configured to acquire preset third attribute information, wherein the third attribute information is attribute information related to live stream activities corresponding to the target live room; and
the model determination unit is further configured to obtain the streamer portrait model by training the preset initial streamer portrait model based on the first attribute information and the third attribute information.

11. The apparatus of assisting live streaming according to claim 8, wherein
the information acquisition unit is further configured to acquire fourth attribute information related to the first attribute information, wherein the fourth attribute information is attribute information of a live room associated with the target live room; and
the model determination unit is further configured to obtain the streamer portrait model by training the preset initial streamer portrait model based on the first attribute information and the fourth attribute information.

12. The apparatus of assisting live streaming according to claim 11, wherein the information acquisition unit is configured to:
acquire a live room attribute data set; and
perform correlation analysis on the live room attribute data set and the first attribute information, and determining a live room attribute data set with a correlation meeting a preset condition as the fourth attribute information.

13. The apparatus of assisting live streaming according to claim 8, wherein the live streaming assistance unit is configured to:
detect instruction information of the target live room; and
when detecting that the target live room initiates an instruction, in response to the instruction, assist the streamer of the target live room in doing the live stream based on the streamer portrait model.

14. The apparatus of assisting live streaming according to claim 8, wherein the live streaming assistance unit is configured to:
detect the first attribute information; and
in response to the first attribute information satisfying a preset polling rule, assist the streamer of the target live room in doing the live stream based on the streamer portrait model.

15. An electronic device, comprising:
a processor; and
a memory configured to store instructions executable by the processor; wherein
when executing the instructions, the processor is configured to perform:
acquiring first attribute information of a target live room, wherein the first attribute information is attribute information related to historical activities of the target live room;
training a preset initial streamer portrait model based on the first attribute information to obtain a streamer portrait model; and
assisting a streamer of the target live room in doing a live stream according to the streamer portrait model.

16. The electronic device according to claim 15, wherein the processor is configured to perform:
training the initial streamer portrait model based on the first attribute information, and obtaining second attribute information by assisting the streamer of the target live room in doing the live stream, wherein the second attribute information is real-time attribute information for doing the live stream; and
updating the first attribute information based on the second attribute information, and iteratively training the streamer portrait model.

17. The electronic device according to claim 15, wherein the processor is further configured to perform:
acquiring preset third attribute information, wherein the third attribute information is attribute information related to live stream activities corresponding to the target live room; and
training the preset initial streamer portrait model based on the first attribute information and the third attribute information to obtain the streamer portrait model.

18. The electronic device according to claim 15, wherein the processor is further configured to perform:
acquiring fourth attribute information related to the first attribute information, wherein the fourth attribute information is attribute information of a live room associated with the target live room; and
training the preset initial streamer portrait model based on the first attribute information and the fourth attribute information to obtain the streamer portrait model.

19. The electronic device according to claim 18, wherein the processor is configured to perform:
acquiring a live room attribute data set; and
performing correlation analysis on the live room attribute data set and the first attribute information, and determining a live room attribute data set with a correlation meeting a preset condition as the fourth attribute information.

20. The electronic device according to claim 15, wherein the processor is specifically configured to perform:
detecting instruction information of the target live room; and
when detecting that the target live room initiates an instruction, in response to the instruction, assisting the streamer of the target live room in doing the live stream based on the streamer portrait model.

21. The electronic device according to claim 15, wherein the processor is configured to perform:
detecting the first attribute information; and
in response to the first attribute information satisfying a preset polling rule, assisting the streamer of the target live room in doing the live stream based on the streamer portrait model.

22. A storage medium, wherein when instructions in the storage medium is executed by a processor of an electronic device, the electronic device executes the method of assisting live streaming according to any one of claims 1-7.
